(19) **Europäisches Patentamt / European Patent Office / Office européen des brevets**

(11) **EP 3 387 230 B1**

(12) **FASCICULE DE BREVET EUROPEEN**

(45) Date de publication et mention de la délivrance du brevet:
**11.09.2019 Bulletin 2019/37**

(21) Numéro de dépôt: **16813105.0**

(22) Date de dépôt: **08.12.2016**

(51) Int Cl.:
*F01N 3/20* *(2006.01)*    *F01N 11/00* *(2006.01)*
*F02M 26/13* *(2016.01)*    *F02M 26/06* *(2016.01)*

(86) Numéro de dépôt international:
**PCT/FR2016/053261**

(87) Numéro de publication internationale:
**WO 2017/098154 (15.06.2017 Gazette 2017/24)**

(54) **PROCEDE DE DIAGNOSTIC D'UN CATALYSEUR DE REDUCTION SELECTIVE DES OXYDES D'AZOTE D'UN MOTEUR ET DISPOSITIF ASSOCIE**

VERFAHREN ZUR DIAGNOSE EINES KATALYSATORS ZUR SELEKTIVEN REDUKTION VON STICKOXIDEN EINES MOTORS UND ZUGEHÖRIGE VORRICHTUNG

METHOD FOR DIAGNOSING A CATALYST FOR SELECTIVE REDUCTION OF NITROGEN OXIDES OF AN ENGINE AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2015 FR 1562181**

(43) Date de publication de la demande:
**17.10.2018 Bulletin 2018/42**

(73) Titulaire: **RENAULT s.a.s.**
**92100 Boulogne-Billancourt (FR)**

(72) Inventeurs:
• **SELLAMI, Ali**
  **75012 Paris (FR)**
• **RONDELE, Sylvere**
  **91650 Saint-Yon (FR)**
• **DAMAGNEZ, Frederic**
  **91710 Vert-le-Petit (FR)**

(56) Documents cités:
**WO-A1-2009/127941      DE-A1-102014 018 037**
**DE-A1-102014 201 000**

**Description**

DOMAINE TECHNIQUE DE L'INVENTION

L'invention concerne un procédé de diagnostic de l'état de fonctionnement d'un catalyseur de réduction sélective des oxydes d'azote (catalyseur SCR) d'un moteur à combustion interne. Elle concerne également un dispositif apte à la mise en oeuvre d'un tel procédé. Elle trouve une application avantageuse sous la forme d'un diagnostic embarqué dans un véhicule automobile équipé d'un moteur diesel associé à un catalyseur SCR.

ETAT DE LA TECHNIQUE

De nombreux moteurs modernes à combustion interne, en particulier les moteurs diesel des véhicules automobiles, sont équipés à l'échappement d'un catalyseur de réduction sélective des oxydes d'azote, dit aussi catalyseur SCR (de l'acronyme en langue anglaise : Selective Catalytic Réduction).

De manière connue, un tel catalyseur SCR permet de réduire en molécules inoffensives pour l'environnement les molécules d'oxydes d'azote (NOx) émises dans les gaz de combustion du moteur, sous l'action de réducteurs injectés de manière continue à l'entrée du catalyseur SCR. Ces réducteurs sont généralement de l'ammoniac provenant d'une solution d'urée aqueuse connue sous la dénomination commerciale Adblue®. Le dosage de l'urée est réalisé en continu de manière précise par un calculateur du moteur : ce dernier injecte suffisamment d'urée pour permettre la réduction de la plus grande quantité possible d'oxydes d'azote, mais il n'en injecte pas davantage, de manière à éviter des fuites d'ammoniac à la sortie du catalyseur SCR.

Un catalyseur SCR permet de diminuer les rejets dans l'atmosphère des émissions d'oxydes d'azote provenant des gaz de combustion d'un moteur, et de respecter les normes légales qui limitent les émissions à l'échappement d'espèces polluantes par les véhicules automobiles. Par exemple, la norme européenne dite « euro6 » limite les émissions d'oxydes d'azote des véhicules équipés d'un moteur diesel à 80 milligrammes par kilomètre parcouru, sur le cycle dit « NEDC ».

D'autre part, la législation oblige les véhicules automobiles à être équipés d'un système de diagnostic embarqué, dit aussi système de contrôle OBD (acronyme en langue anglaise pour : On Board Diagnostic), apte à vérifier de manière continue que les émissions polluantes ne dépassent pas les limites légales, et à signaler le cas échéant un tel dépassement au conducteur, typiquement par l'allumage d'un voyant au tableau de bord, pour que le conducteur puisse faire procéder à la remise en état du véhicule.

Un tel système de contrôle OBD surveille en outre le bon fonctionnement des différents composants du véhicule qui contribuent au respect des niveaux d'émissions polluantes, et il provoque l'allumage d'un voyant, dit voyant OBD, au tableau de bord du véhicule en cas de dépassement de ces niveaux. Ainsi, le conducteur du véhicule est alerté que le véhicule ne respecte plus la législation et il est incité à le faire remettre en état.

Le système de contrôle OBD contrôle notamment les composants qui participent à la formation des gaz de combustion à la sortie du moteur (vanne d'admission d'air, injecteurs de carburant, etc...) et les composants qui participent à la dépollution desdits gaz de combustion dans la ligne d'échappement.

Dans le cas d'un moteur diesel équipé d'un catalyseur SCR, le système de contrôle OBD surveille plus particulièrement l'efficacité du catalyseur, qui correspond à la capacité de celui-ci à réduire les oxydes d'azote, c'est-à-dire au rendement de la réaction de réduction des oxydes d'azote par l'ammoniac provenant de la solution d'urée injectée.

Pour ce faire, le catalyseur SCR peut être équipé de manière classique d'un capteur d'oxydes d'azote amont, apte à mesurer une valeur de concentration d'oxydes d'azote entrant $[NO_x]_{in}$ dans le catalyseur, et d'un capteur d'oxydes d'azote aval, apte à mesurer une valeur de concentration d'oxydes d'azote sortant $[NO_x]_{out}$ du catalyseur.

L'efficacité du catalyseur SCR peut alors être calculée selon l'équation suivante :

$$(\text{Equ.1}) \qquad \varepsilon = ( [NOx]_{in} - [NOx]_{out}) / [NOx]_{in} \,,$$

Il est aussi connu de remplacer le capteur d'oxydes d'azote amont par un modèle d'estimation de la concentration en oxydes d'azote en fonction du point de fonctionnement du moteur, notamment en fonction du couple et du régime du moteur. Mais il reste nécessaire, pour réaliser le diagnostic de disposer au moins d'un capteur d'oxydes d'azote aval, ce qui rend le diagnostic sensible aux défauts de fonctionnement et de manque de précision de ce dernier.

On peut s'affranchir de tels défauts et d'un tel diagnostic, ou disposer d'un diagnostic redondant permettant de confirmer la défaillance d'un catalyseur SCR, par la mise en oeuvre d'un diagnostic conforme à la publication DE-A1-10 2012 025 002 ou DE-A1-10 2014 018 037.

Cette publication divulgue un procédé de diagnostic, par la seule sonde à oxydes d'azote amont, d'un catalyseur SCR monté à l'échappement d'un moteur suralimenté qui est associé à une boucle de recirculation à basse pression des gaz d'échappement à l'admission du moteur (boucle EGR BP), ladite boucle prélevant une partie desdits gaz en aval du catalyseur SCR et les recyclant en amont du compresseur du turbocompresseur du moteur.

Les gaz d'échappement recyclés étant prélevés en aval du catalyseur SCR, ils ont une composition, notamment une concentration en oxydes d'azote, qui dépend de l'état de fonctionnement du catalyseur SCR, c'est-à-dire de son efficacité $\varepsilon$. Etant ensuite recyclés à l'admission du moteur, ils influent sur la concentration en oxydes d'azote des gaz d'échappement entrant dans le catalyseur SCR. Le procédé selon la publication DE-A1-10 2012 025 002 prévoit ainsi de diagnostiquer l'état de fonctionnement du catalyseur SCR par comparaison entre une valeur mesurée de concentration d'oxydes d'azote entrant dans le catalyseur SCR, et une valeur modélisée en fonction du point de fonctionnement du moteur.

Le procédé qui vient d'être décrit n'est pas assez précis, plus exactement pas assez discriminant entre un catalyseur défaillant et un catalyseur non défaillant car il repose sur des différences faibles de concentration en oxydes d'azote, dans la boucle de recirculation des gaz, entre un catalyseur encore à la limite de la conformité et un catalyseur tout juste défaillant. Ces différences de concentration sont plus petites que la précision de mesure du capteur d'oxydes d'azote amont et que la précision du modèle d'estimation de la concentration en oxyde d'azote. Elles conduisent à des risques de non détection (catalyseur défaillant jugé conforme) et des risques de fausse détection (catalyseur conforme jugé défaillant).

RESUME DE L'INVENTION

L'invention propose de remédier aux défauts des procédés de diagnostics connus.

Elle propose pour cela un procédé de diagnostic d'un catalyseur de réduction sélective des oxydes d'azote d'un dispositif de motorisation de véhicule automobile, ledit dispositif comprenant un moteur à combustion interne et un circuit d'échappement du moteur dans lequel est monté le catalyseur, ledit circuit comprenant une boucle de recirculation à basse pression des gaz d'échappement à l'admission du moteur à partir d'un point situé en aval du catalyseur, ledit catalyseur étant apte à décomposer les oxydes d'azote des gaz de combustion du moteur par réaction avec des réducteurs injectés en son sein, ledit catalyseur étant associé à un capteur à oxydes d'azote apte à mesurer une concentration en oxydes d'azote et en ammoniac à l'entrée du catalyseur, le procédé comprenant :

- Une étape de détermination d'une concentration en oxydes d'azote et en ammoniac mesurée, et d'une concentration en oxydes d'azote théorique entrant dans le catalyseur ;
- Une étape de calcul d'un critère de diagnostic, qui est une fonction de la différence entre ladite concentration mesurée et ladite concentration théorique ;
- Une étape de comparaison dudit critère avec un seuil de défaillance ;
- Une étape dans laquelle le catalyseur est déclaré défaillant lorsque ledit critère est supérieur audit seuil ; et,
- Une étape dans laquelle le conducteur du véhicule automobile est alerté lorsque le catalyseur est déclaré défaillant.

La principale caractéristique du procédé selon l'invention est qu'il comprend, préalablement à l'étape au cours de laquelle on détermine une valeur de concentration mesurée, une étape de basculement du fonctionnement du dispositif de motorisation, à partir d'un mode de réglage nominal, dans un mode de réglage de diagnostic dans lequel les injections de réducteurs dans le catalyseur sont augmentées de manière à provoquer des fuites d'ammoniac à la sortie du catalyseur.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente un exemple de dispositif de motorisation apte à la mise en oeuvre du procédé selon l'invention ; et,
- la figure 2 est un logigramme des étapes d'un procédé de contrôle du dispositif de motorisation conforme à l'invention.

DESCRIPTION DETAILLEE DES FIGURES

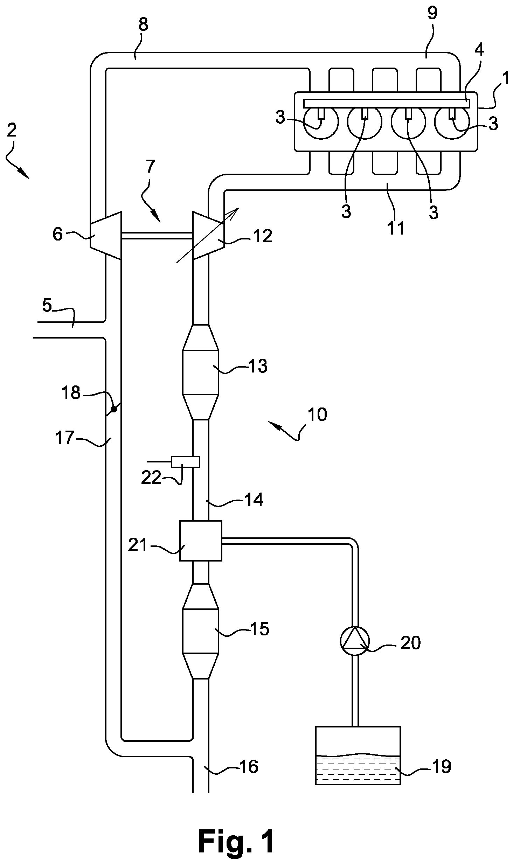

Sur la figure 1, on a représenté un dispositif de motorisation apte à la mise en oeuvre du procédé selon l'invention. Il comprend un moteur 1 à combustion interne, par exemple un moteur diesel de véhicule automobile, qui se présente ici sous la forme d'un moteur à quatre cylindres en ligne suralimenté. Le moteur 1 est alimenté en air par un circuit d'admission d'air 2, et en carburant, par exemple du gazole, par une pluralité d'injecteurs 3 montés sur une rampe commune 4 d'alimentation en carburant.

Le circuit d'admission d'air 2 comporte d'amont en aval, c'est-à-dire dans le sens de circulation de l'air, une conduite d'admission d'air 5, un compresseur 6 d'un turbocompresseur 7 du moteur 1, une conduite de liaison compresseur - collecteur d'admission 8 et un collecteur d'admission 9. Bien entendu, le circuit d'admission 2 peut comporter d'autres composants non représentés ici, par exemple un filtre à air, un refroidisseur d'air suralimenté, une vanne de réglage du débit admis dans le collecteur d'admission 9, un débitmètre, etc.

Le moteur 1 est aussi équipé d'un circuit d'échappement 10 des gaz d'échappement, comprenant d'amont en aval, c'est-à-dire dans le sens de circulation des gaz, un collecteur d'échappement 11, une turbine 12 du turbocompresseur 7, un pot catalytique 13 comportant par exemple un catalyseur d'oxydation 13 et/ou un filtre à particules 13, une conduite de liaison 14 pot catalytique - catalyseur SCR, un catalyseur de réduction sélective des oxydes d'azote 15, dit aussi catalyseur SCR 15, et une conduite d'échappement 16.

La flèche représentée sur la turbine 12 signale qu'il s'agit d'une turbine dont les ailettes sont inclinables. En d'autres termes le turbocompresseur 7 se présente ici sous la forme d'un turbocompresseur 7 à géométrie variable. Bien entendu, dans une variante non représentée, le turbocompresseur 7 peut être un turbocompresseur à géométrie fixe.

Le circuit d'échappement 10 comprend par ailleurs au moins un circuit de recirculation des gaz d'échappement à basse pression 17, dit aussi circuit EGR BP 17, apte à recyclés une partie des gaz d'échappement du moteur à l'admission. Selon l'invention, ce circuit 17 prend naissance en aval du catalyseur SCR 15, en un point du circuit d'échappement situé sur la conduite d'échappement 16. Son autre extrémité débouche dans la conduite d'admission d'air 5, en amont du compresseur 6. Il est équipé d'une vanne de recirculation partielle des gaz d'échappement à basse pression 18, dite aussi vanne EGR BP 18, dont le réglage permet d'ajuster la proportion de gaz recyclés.

Le catalyseur SCR est alimenté en agents réducteurs, provenant d'une solution d'urée aqueuse (Adblue®) à partir d'un réservoir 19. La solution est pompée par une pompe 20 et introduite en amont du catalyseur SCR 15 en un point de la conduite de liaison 14 pot catalytique - catalyseur SCR grâce à un dispositif d'introduction 21, par exemple un mixeur 21 ou un injecteur d'urée 21.

En amont du catalyseur SCR 15 (dans le sens de circulation des gaz d'échappement), un capteur d'oxydes d'azote 22, dit capteur d'oxydes d'azote amont 22, permet de mesurer la concentration en oxydes d'azote entrant $[NOx]_{in,mes}$ dans le catalyseur SCR 15. Ce capteur 22 est monté par exemple sur la conduite de liaison pot catalytique - catalyseur SCR 14, en un point situé en amont du dispositif d'introduction 21.

Le dispositif de motorisation comprend aussi des moyens de contrôle (non représentés), par exemple un calculateur électronique, apte à régler les paramètres de fonctionnement du dispositif de motorisation, notamment du moteur 1 et du catalyseur SCR, en fonction d'une consigne de couple correspondant à un enfoncement de la pédale d'accélérateur par le conducteur du véhicule et à un régime donné. De manière connue en soi, le calculateur règle l'admission d'air et les quantités de gaz d'échappement à basse pression recyclés à l'admission, l'injection de carburant dans le moteur, et le débit de la solution aqueuse d'urée injecté dans le catalyseur SCR 15.

En fonctionnement normal, c'est-à-dire en l'absence de mise en oeuvre du procédé de diagnostic selon l'invention, le réglage du dispositif de motorisation est un réglage nominal. Plus précisément, le débit de réducteurs injectés dans le catalyseur SCR 15 est réglé à une valeur nominale qui confère au catalyseur SCR 15 la plus grande efficacité de réduction des oxydes d'azote possible. De manière connue en soi, on vise à maintenir à l'intérieur du catalyseur SCR 15 une quantité d'ammoniac résultant de la décomposition dans le catalyseur SCR 15 de la solution aqueuse d'urée. Ce stock d'ammoniac, dit aussi ASC (de l'acronyme en langue anglaise pour : Ammonia Storage Capacity), doit être aussi élevé que possible pour favoriser la réduction des oxydes d'azote. Dans le réglage nominal, on injecte donc des quantités d'urée dans le catalyseur SCR 15 aptes à maintenir l'ASC à une valeur élevée. Toutefois, comme un catalyseur SCR a un ASC limité, la limite supérieure diminuant au fur et à mesure que le catalyseur SCR vieillit et qu'il perd en efficacité, on ne dépasse pas un débit d'injection maximal à partir duquel des fuites d'ammoniac apparaissent en aval du catalyseur SCR.

On comprend qu'un second mode de réglage, dit réglage de diagnostic, dans lequel on injecte une quantité d'urée supérieure à celle du réglage nominal de manière à favoriser les fuites d'ammoniac en aval du catalyseur est possible. De telles fuites sont d'autant plus importantes que le catalyseur SCR 15 perd en efficacité. Une partie de l'ammoniac largué par le catalyseur SCR 15 est recyclé à l'admission du moteur par la boucle de recirculation EGR BP 17, avec une partie des oxydes d'azote non traités.

De manière connue en soi, un capteur d'oxydes d'azote est sensible non seulement aux oxydes d'azote, mais aussi à l'ammoniac. Plus précisément, il mesure une somme de la concentration en oxydes d'azote et en ammoniac. Le réglage de diagnostic permet, grâce au recyclage de l'ammoniac qui se cumule au recyclage des oxydes d'azote, d'amplifier la sensibilité du capteur d'oxydes d'azote amont 22 à l'efficacité du catalyseur et de favoriser une distinction très fine entre un catalyseur encore conforme et un catalyseur juste défaillant.

Pour ce faire, le dispositif de motorisation comprend des moyens de son réglage, depuis le réglage nominal vers un tel réglage de diagnostic apte à favoriser les fuites d'ammoniac.

Le calculateur comprend des moyens de modélisation de la concentration en oxydes d'azote théorique [NOx]

in,th dans les gaz de combustion du moteur et entrant dans le catalyseur SCR 15, en fonction d'un ensemble de paramètres représentatifs du point de fonctionnement courant du moteur, comprenant au moins le régime et la charge, et du taux d'EGR BP, c'est-à-dire de la proportion de gaz d'échappement recyclés à l'admission. Ce modèle peut être établi pour un catalyseur SCR en parfait état de fonctionnement, ou en variante pour un catalyseur dont l'efficacité $\varepsilon$ correspond au seuil d'efficacité OBD du catalyseur $\varepsilon_{OBD}$ en dessous duquel le catalyseur SCR 15 est déclaré défaillant.

Le calculateur comprend des moyens de calcul d'un critère de diagnostic C qui est égal à la différence entre la concentration en oxydes d'azote et en ammoniac entrante mesurée $[NOx]_{in,mes}$ par le capteur d'oxydes d'azote amont 22, et la concentration en oxydes d'azote théorique $[NOx]_{in,th}$, pour un point de fonctionnement du moteur et un taux d'EGR donnés.

Dans un mode de réalisation perfectionné, et afin d'accroître davantage la sensibilité du critère C et la précision du diagnostic, on peut prévoir de calculer le critère comme l'intégrale temporelle, sur une durée $\Delta t$ prédéterminée de fonctionnement du moteur, de la différence entre la concentration mesurée et la concentration théorique, selon l'équation suivante :

$$(Eq.2) \qquad C = \int_{\Delta t} \left( [NOx]_{in,mes} - [NOx]_{in,th} \right) *dt$$

Le calculateur comprend des moyens de comparaison du critère C avec un seuil de défaillance S, et des moyens aptes à déclencher une alerte au tableau de bord du véhicule, typiquement sous la forme de l'allumage d'un voyant, dit voyant OBD, lorsque le critère C du catalyseur est supérieur audit seuil S.

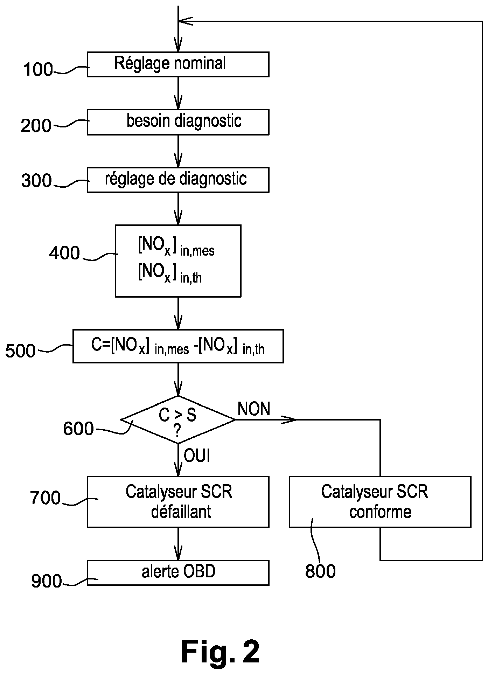

La figure 2 est un logigramme des étapes du procédé de contrôle du dispositif de motorisation selon un mode de réalisation de l'invention.

Le procédé débute après une étape de fonctionnement normal du dispositif par une étape 100 dans laquelle le dispositif de motorisation est réglé dans un mode de réglage nominal.

Le procédé débute par une étape 200 dans laquelle un besoin de diagnostic est détecté par le calculateur, par exemple lorsqu'une durée prédéterminée s'est écoulée depuis le diagnostic précédent.

Le procédé se poursuit par une étape 300 dans laquelle le calculateur bascule le fonctionnement du dispositif de motorisation dans un mode de réglage de diagnostic, dans lequel les injections d'urée dans le catalyseur SCR 15 sont augmentées, de manière à favoriser les fuites d'ammoniac en aval du catalyseur.

A une étape 400, le calculateur enregistre au moins une mesure de la concentration en oxydes d'azote et en ammoniac entrant $[NOx]_{in,mes}$ dans le catalyseur, et au moins une valeur modélisée $[NOx]_{in,th}$ de la concentration en oxydes d'azote entrant dans le catalyseur correspondant au même point de fonctionnement du moteur et au même taux d'EGR.

A une étape 500, le calculateur calcule un critère C de diagnostic du catalyseur SCR. Ce critère peut être égal à la différence entre la concentration mesurée et la concentration théorique pour le point de fonctionnement du moteur et le taux d'EGR de l'étape 400, ou, dans un mode perfectionné, à une intégrale temporelle de ladite différence.

A une étape 600, le calculateur compare le critère C à, un seuil de défaillance S. Si ledit critère C est supérieur audit seuil S, le procédé oriente vers une étape 700 dans laquelle le catalyseur est déclaré défaillant. Dans le cas contraire, le procédé oriente vers une étape 800 dans laquelle le catalyseur est déclaré conforme.

Dans le cas où le catalyseur SCR 15 est déclaré défaillant, le procédé de diagnostic se poursuit par une étape 900 dans laquelle une alerte est remontée au tableau de bord du véhicule. Dans le cas où le catalyseur est déclaré conforme, le procédé de diagnostic se termine, et le réglage du dispositif de motorisation est basculé vers son réglage nominal d'origine, dans lequel il n'est pas injecté d'urée en excès dans le catalyseur SCR.

**Revendications**

1. Procédé de diagnostic d'un catalyseur de réduction sélective (15) des oxydes d'azote d'un dispositif de motorisation de véhicule automobile, ledit dispositif comprenant un moteur (1) à combustion interne et un circuit d'échappement (10) du moteur dans lequel est monté le catalyseur (15), ledit circuit comprenant une boucle de recirculation à basse pression (17) des gaz d'échappement à l'admission du moteur à partir d'un point situé en aval du catalyseur (15), ledit catalyseur étant apte à décomposer les oxydes d'azote des gaz de combustion du moteur (1) par réaction avec des réducteurs injectés en son sein, ledit catalyseur étant associé à un capteur à oxydes d'azote (22) apte à mesurer une concentration en oxydes d'azote et en ammoniac à l'entrée du catalyseur (15), le procédé comprenant :

   - une étape (200) de détermination d'une concentration en oxydes d'azote et en ammoniac ($[NOx]_{in,mes}$) mesurée, et d'une concentration en oxydes d'azote théorique ($[NOx]_{in,th}$) entrant dans le catalyseur ;

- une étape (500) de calcul d'un critère de diagnostic (C), qui est une fonction de la différence entre ladite concentration mesurée ($[NOx]_{in,mes}$) et ladite concentration théorique ($[NOx]_{in,th}$) ;
- une étape (600) de comparaison dudit critère (C) avec un seuil (S) de défaillance ;
- une étape (700) dans laquelle le catalyseur (15) est déclaré défaillant lorsque ledit critère (C) est supérieur audit seuil (S) ; et,
- une étape (800) dans laquelle le conducteur du véhicule automobile est alerté lorsque le catalyseur est déclaré défaillant, **CARACTERISE EN CE QU'**

il comprend, préalablement à l'étape (400) au cours de laquelle on détermine la valeur de concentration mesurée ($[NOx]_{in,mes}$), une étape (300) de basculement du fonctionnement du dispositif de motorisation, à partir d'un mode de réglage nominal, dans un mode de réglage de diagnostic dans lequel les injections de réducteurs dans le catalyseur (15) sont augmentées de manière à provoquer des fuites d'ammoniac à la sortie du catalyseur (15).

2. Procédé selon la revendication 1, dans lequel le critère de diagnostic (C) est égal à la différence entre ladite concentration mesurée ($[NOx]_{in,mes}$) et ladite concentration théorique ($[NOx]_{in,th}$).

3. Procédé selon la revendication 1, dans lequel le critère de diagnostic est égal à l'intégrale temporelle, pendant une durée prédéterminée, de la différence entre ladite concentration mesurée ($[NOx]_{in,mes}$) et ladite concentration théorique ($[NOx]_{in,th}$).

4. Procédé selon l'une quelconque des revendications 1 à 3, dans lequel le conducteur est alerté par l'allumage d'un voyant au tableau de bord du véhicule.

5. Procédé selon l'une quelconque des revendications 1 à 4, **caractérisé en ce que** la concentration en oxydes d'azote théorique ($[NOx]_{in,th}$) est modélisée en fonction d'un ensemble de paramètres représentatifs du point de fonctionnement du moteur, comprenant au moins le régime et la charge, et d'un taux de recirculation des gaz d'échappement.

6. Dispositif de motorisation de véhicule automobile pour la mise en oeuvre du procédé selon l'une quelconque des revendications 1 ou 5, comprenant un moteur (1) à combustion interne et un catalyseur de réduction sélective des oxydes d'azote (15) monté dans le circuit d'échappement (10) du moteur, le circuit d'échappement comprenant une boucle de recirculation à basse pression (17) des gaz d'échappement du moteur à l'admission à partir d'un point situé en aval du catalyseur (15), CACTERISE EN CE QU'il comprend en outre :

- des moyens de détermination d'une valeur mesurée de la concentration en oxydes d'azote et en ammoniac entrant dans le catalyseur, et d'une valeur théorique de la concentration en oxydes d'azote entrant dans le catalyseur ;
- des moyens de calcul d'un critère de diagnostic (C) en fonction de la différence entre ladite valeur mesurée et ladite valeur théorique ;
- des moyens de comparaison dudit critère de diagnostic avec un seuil de défaillance (S) ;
- des moyens aptes à déclarer le catalyseur défaillant lorsque ledit critère est supérieur audit seuil ;
- des moyens de déclenchement d'une alerte du conducteur du véhicule automobile, lorsque le catalyseur est déclaré défaillant ; et,
- des moyens de basculement du fonctionnement du dispositif de motorisation dans un mode de réglage de diagnostic dans lequel les injections de réducteurs dans le catalyseur sont augmentées de manière à provoquer des fuites d'ammoniac à la sortie du catalyseur.

**Patentansprüche**

1. Verfahren zur Diagnose eines Katalysators zur selektiven Reduktion (15) der Stickoxide einer Motorisierungsvorrichtung eines Kraftfahrzeugs, wobei die Vorrichtung einen Verbrennungsmotor (1) und eine Abgasanlage (10) des Motors, in welcher der Katalysator (15) angebracht ist, umfasst, wobei diese Anlage eine Schleife zur Niederdruck-Rückführung (17) der Abgase zum Einlass des Motors von einem stromabwärts des Katalysators (15) befindlichen Punkt aus umfasst, wobei der Katalysator dafür ausgelegt ist, die Stickoxide der Verbrennungsgase des Motors (1) durch Reaktion mit Reduktionsmitteln, die in sein Inneres eingespritzt werden, zu zersetzen, wobei der Katalysator mit einem Stickoxidsensor (22) verbunden ist, der dafür ausgelegt ist, eine Konzentration von Stickoxiden und von Ammoniak am Eingang des Katalysators (15) zu messen, wobei das Verfahren umfasst:

- einen Schritt (200) der Bestimmung einer gemessenen Konzentration von Stickoxiden und von Ammoniak ($[NOx]_{in,mes}$) und einer theoretischen Konzentration von Stickoxiden ($[NOx]_{in,th}$), die in den Katalysator eintreten;
- einen Schritt (500) der Berechnung eines Diagnosekriteriums (C), welches eine Funktion der Differenz zwischen der gemessenen Konzentration ($[NOx]_{in,mes}$) und der theoretischen Konzentration ($[NOx]_{in,th}$)ist;
- einen Schritt (600) des Vergleichs des Kriteriums (C) mit einem Schwellenwert (S) des Ausfalls;
- einen Schritt (700), in welchem der Katalysator (15) für ausgefallen erklärt wird, wenn das Kriterium (C) größer als der Schwellenwert (S) ist; und
- einen Schritt (800), in welchem der Fahrer des Kraftfahrzeugs gewarnt wird, wenn der Katalysator für ausgefallen erklärt wird,

**dadurch gekennzeichnet, dass**

es vor dem Schritt (400), in welchem der Wert der gemessenen Konzentration ($[NOx]_{in,mes}$) bestimmt wird, einen Schritt (300) der Umschaltung der Betriebsweise der Motorisierungsvorrichtung von einem Nenn-Regelungsmodus in einen Diagnose-Regelungsmodus umfasst, in welchem die Einspritzungen von Reduktionsmitteln in den Katalysator (15) erhöht werden, um so ein Entweichen von Ammoniak am Ausgang des Katalysators (15) hervorzurufen.

2. Verfahren nach Anspruch 1, wobei das Diagnosekriterium (C) gleich der Differenz zwischen der gemessenen Konzentration ($[NOx]_{in,mes}$) und der theoretischen Konzentration ($[NOx]_{in,th}$)ist.

3. Verfahren nach Anspruch 1, wobei das Diagnosekriterium gleich dem Zeitintegral, über eine vorbestimmte Dauer, der Differenz zwischen der gemessenen Konzentration ($[NOx]_{in,mes}$) und der theoretischen Konzentration ($[NOx]_{in,th}$)ist.

4. Verfahren nach einem der Ansprüche 1 bis 3, wobei der Fahrer durch das Aufleuchten einer Kontrollleuchte am Armaturenbrett des Fahrzeugs gewarnt wird.

5. Verfahren nach einem der Ansprüche 1 bis 4, **dadurch gekennzeichnet, dass** die theoretische Konzentration von Stickoxiden ($[NOx]_{in,th}$) in Abhängigkeit von einer Menge von für den Betriebspunkt des Motors repräsentativen Parametern, die wenigstens die Drehzahl und die Last umfasst, und von einer Rückführungsrate der Abgase modelliert wird.

6. Motorisierungsvorrichtung eines Kraftfahrzeugs zur Durchführung des Verfahrens nach einem der Ansprüche 1 bis 5, welche einen Verbrennungsmotor (1) und einen Katalysator zur selektiven Reduktion der Stickoxide (15), der in der Abgasanlage (10) des Motors angebracht ist, umfasst, wobei die Abgasanlage eine Schleife zur Niederdruck-Rückführung (17) der Abgase des Motors zum Einlass von einem stromabwärts des Katalysators (15) befindlichen Punkt aus umfasst, **dadurch gekennzeichnet, dass** sie außerdem umfasst:

- Mittel zur Bestimmung eines Messwertes der Konzentration von Stickoxiden und von Ammoniak, die in den Katalysator eintreten, und eines theoretischen Wertes der Konzentration von Stickoxiden, die in den Katalysator eintreten;
- Mittel zur Berechnung eines Diagnosekriteriums (C) in Abhängigkeit von der Differenz zwischen dem Messwert und dem theoretischen Wert;
- Mittel zum Vergleich des Diagnosekriteriums mit einem Schwellenwert des Ausfalls (S);
- Mittel, die dafür ausgelegt sind, den Katalysator für ausgefallen zu erklären, wenn das Kriterium größer als der Schwellenwert ist;
- Mittel zum Auslösen einer Warnung des Fahrers des Kraftfahrzeugs, wenn der Katalysator für ausgefallen erklärt wird; und
- Mittel zur Umschaltung der Betriebsweise der Motorisierungsvorrichtung in einen Diagnose-Regelungsmodus, in welchem die Einspritzungen von Reduktionsmitteln in den Katalysator erhöht werden, um so ein Entweichen von Ammoniak am Ausgang des Katalysators hervorzurufen.

**Claims**

1. Method for diagnosing a catalytic converter (15) for the selective catalytic reduction of the nitrogen oxides of a motor vehicle drive device, the said device comprising an internal combustion engine (1) and an exhaust circuit (10) of the engine in which the catalytic converter (15) is fitted, the said circuit comprising a low-pressure exhaust gas recirculation loop (17) recirculating the exhaust gases to the intake side of the engine from a point situated downstream of the catalytic converter (15), the said catalytic converter being able to break down the nitrogen oxides of the combustion gases of the engine (1) by reaction with reducing agents injected into it, the said catalytic converter being associated with a nitrogen oxides sensor (22) able to measure a nitrogen oxides and ammonia concentration at the inlet of the catalytic converter (15), the method comprising:

- a step (200) of determining a measured nitrogen oxides and ammonia concentration ($[NOx]_{in,meas}$) and a theoretical nitrogen oxides concentration ($[NOx]_{in,th}$) entering the catalytic converter;
- a step (500) of calculating a diagnostics criterion (C) which is a function of the difference between the said measured concentration ($[NOx]_{in,meas}$) and the said theoretical concentration ($[NOx]_{in,th}$);
- a step (600) of comparing the said criterion (C) with a fault threshold (S);
- a step (700) in which the catalytic converter (15) is declared to be faulty when the said criterion (C) is above the said threshold (S); and
- a step (800) in which the driver of the motor vehicle is alerted when the catalytic converter is declared to be faulty,

**characterized in that**
it comprises, prior to the step (400) during which the measured concentration value ($[NOx]_{in,meas}$) is determined, a step (300) of switching over the operation of the drive device, from a nominal-setting mode to a diagnostics-setting mode in which the injections of reducing agents into the catalytic converter (15) are increased so as to provoke the escape of ammonia at the outlet of the catalytic converter (15).

2. Method according to Claim 1, in which the diagnostics criterion (C) is equal to the difference between the said measured concentration ($[NOx]_{in,meas}$) and the said theoretical concentration ($[NOx]_{in,th}$).

3. Method according to Claim 1, in which the diagnostics criterion is equal to the integral with respect to time, over a predetermined duration, of the difference between the said measured concentration ($[NOx]_{in,meas}$) and the said theoretical concentration ($[NOx]_{in,th}$).

4. Method according to any one of Claims 1 to 3, in which the driver is alerted by the illumination of an indicator lamp on the instrument panel of the vehicle.

5. Method according to any one of Claims 1 to 4, **characterized in that** the theoretical nitrogen oxides concentration ($[NOx]_{in,th}$) is modelled as a function of a set of parameters indicative of the operating point of the engine, including at least the engine speed and load, and an exhaust gas recirculation level.

6. Motor vehicle drive device for implementing the method according to either one of Claims 1 and 5, comprising an internal combustion engine (1) and a catalytic converter (15) for the selective catalytic reduction of nitrogen oxides fitted in the exhaust circuit (10) of the engine, the exhaust circuit comprising a low-pressure exhaust gas recirculation loop (17) recirculating the exhaust gases from the engine to the inlet side of the engine from a point situated downstream of the catalytic converter (15), **characterized in that** it further comprises:

- means for determining a measured value of the nitrogen oxides and ammonia concentration entering the catalytic converter, and a theoretical value for the nitrogen oxides concentration entering the catalytic converter;
- means for calculating a diagnostics criterion (C) as a function of the difference between the said measured value and the said theoretical value;
- means for comparing the said diagnostics criterion with a fault threshold (S);
- means able to declare the catalytic converter faulty when the said criterion is above the said threshold;
- means for triggering an alert for the attention of the driver of the motor vehicle, when the catalytic converter is declared faulty; and
- means for switching over the operation of the drive device into a diagnostics-setting mode in which the injections of reducing agents into the catalytic converter are increased so as to provoke the escape of ammonia at the outlet of the catalytic converter.

**Fig. 1**

100 — Réglage nominal

200 — besoin diagnostic

300 — réglage de diagnostic

400 — $[NO_x]_{in,mes}$
$[NO_x]_{in,th}$

500 — $C=[NO_x]_{in,mes} -[NO_x]_{in,th}$

600 — $C > S$ ? — NON

OUI

700 — Catalyseur SCR défaillant

Catalyseur SCR conforme

800

900 — alerte OBD

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102012025002 A1
- DE 1102014018037 A
- DE 1102012025002 A